# EUROPEAN PATENT APPLICATION

(11) **EP 3 885 489 A1**
(43) Date of publication of application: **29.09.2021**
(21) Application number: 21163146.0
(22) Date of filing: 17.03.2021
(51) Int. Cl.: D21D 1/20, D21H 11/16

(54) **METHOD AND ARRANGEMENT FOR PRODUCING NANOFIBRILLAR CELLULOSE**

(30) Priority: 24.03.2020 FI 20205288
(71) Applicant: Valmet Technologies Oy, 02150 Espoo (FI)
(72) Inventor: Huhtanen, Juha-Pekka, 33701 Tampere (FI); Saukko, Pekka, 33701 Tampere (FI)
(74) Representative: Kolster Oy Ab

(57) **Abstract**

A method and an arrangement (1) for producing nanofibrillar cellulose, wherein lignocellulose-containing fibre material is refined to separate nanofibrils. The method comprises refining the lignocellulose-containing fibre material in at least one refining zone (20) in one or more refiners (5) to separate nanofibrils, supplying the fibre material to be refined into the at least one refining zone of at least one refiner through at least one opening (12, 19) in the refining surface (11, 18) of at least one refining element (7, 13) and/or discharging the fibre material already refined in the at least one refining zone of at least one refiner out of the at least one refining zone through at least one opening (12, 19) in the refining surface (11, 18) of at least one refining element (7, 13), and operating the said at least one refiner to produce a specific edge load (SEL) of less than three J/m in the refining.

## Description

### FIELD OF THE INVENTION

The invention relates to a method for producing nanofibrillar cellulose, wherein lignocellulose-containing fibre material is refined to separate nanofibrils.

The invention relates also to an arrangement for producing nanofibrillar cellulose, the arrangement comprising one or more refiners to refine lignocellulose-containing fibre material to separate nanofibrils.

### BACKGROUND OF THE INVENTION

Nanofibrillar cellulose refers to cellulose microfibrils or microfibril bundles separated from lignocellulose-containing fibre raw material, such as wood material. Nanofibrillar cellulose is characterized by a large specific surface area and a strong ability to form hydrogens bonds. In water dispersion, nanofibrillar cellulose appears as colourless, gel-like material. Nanofibrillar cellulose maybe utilized for example as an additive in manufacturing of new biobased products.

Typically, the producing of nanofibrillar cellulose by refining involves a high-degree grinding, i.e. a high-degree refining, of the lignocellulose-containing fibre material. The grinding or refining generally refers to comminuting material mechanically by work applied to material particles, which work may be grinding, refining, crushing or shearing, or any combination of these, or another corresponding action to reduce the particle size. The refining is performed at a low consistency of a mixture of the fibre material and water, called also for example fibre suspension, fibre pulp or pulp. In addition to this mechanical treatment of the lignocellulose-containing fibre material, the producing of nanofibrillar cellulose may also comprise chemical or enzymatic processing of the lignocellulose-containing fibre material.

A problem relating to the producing of nanofibrillar cellulose by refining is an excessive amount of energy used in the refining. Energy taken by the refining is typically expressed in terms of energy per processed raw material quantity, typical unit being MWh/T, i.e. MWh/ton, or a unit proportional to that. As said above, nanofibrillar cellulose is gel-like material, thereby having a high apparent viscosity because of which frictional forces affecting in blade elements of a refiner are very high and which, in turn, causes a high energy consumption in the producing of the nanofibrillar cellulose. The high energy consumption increases production costs of the nanofibrillar cellulose and thereby for example limits applications of the nanofibrillar cellulose that are economically feasible.

### BRIEF DESCRIPTION OF THE INVENTION

An object of the present invention is to provide a novel method and arrangement for producing nanofibrillar cellulose.

The invention is characterized by the features of the independent claims.

The invention is based on the idea of producing nanofibrillar cellulose by refining such that the fibre material to be refined is supplied into at least one refining zone of at least one refiner through at least one opening in the refining surface of at least one refining element and/or discharging the fibre material already refined in the at least one refining zone of at least one refiner out of the at least one refining zone through at least one opening in the refining surface of at least one refining element and operating the said at least one refiner to produce a specific edge load of less than three J/m in the refining.

An advantage of the invention is that a length of travel of the fibre material to be refined in the refining zone is smaller or shorter than in conventional refining of the nanofibrillar cellulose, wherein the fibre material is supplied into the refining zone through one end thereof and the refined fibre material is discharged out of the refining zone through an opposite end. This has the effect that overall frictional forces affecting in the refining surfaces of the blade elements of the refiner remain reasonable despite of the high apparent viscosity of the nanofibrillar cellulose, which together with the very moderate specific edge load applied in the refining, provides a low energy consumption in the producing of the nanofibrillar cellulose.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows schematically an arrangement for producing nanofibrillar cellulose;
Figure 2 shows schematically in cross section a side view of a conical refiner applicable to be used for producing nanofibrillar cellulose;
Figure 3 shows schematically a planar upper view of a sector-like blade element applicable to be used in the refiner of Figure 2;
Figure 4 shows schematically a method for producing nanofibrillar cellulose; and
Figure 5 shows schematically in cross section a side view of another conical refiner applicable to be used for producing nanofibrillar cellulose.

For the sake of clarity, the figures show some embodiments of the invention in a simplified manner. Like reference numerals identify like elements in the figures.

### DETAILED DESCRIPTION OF THE INVENTION

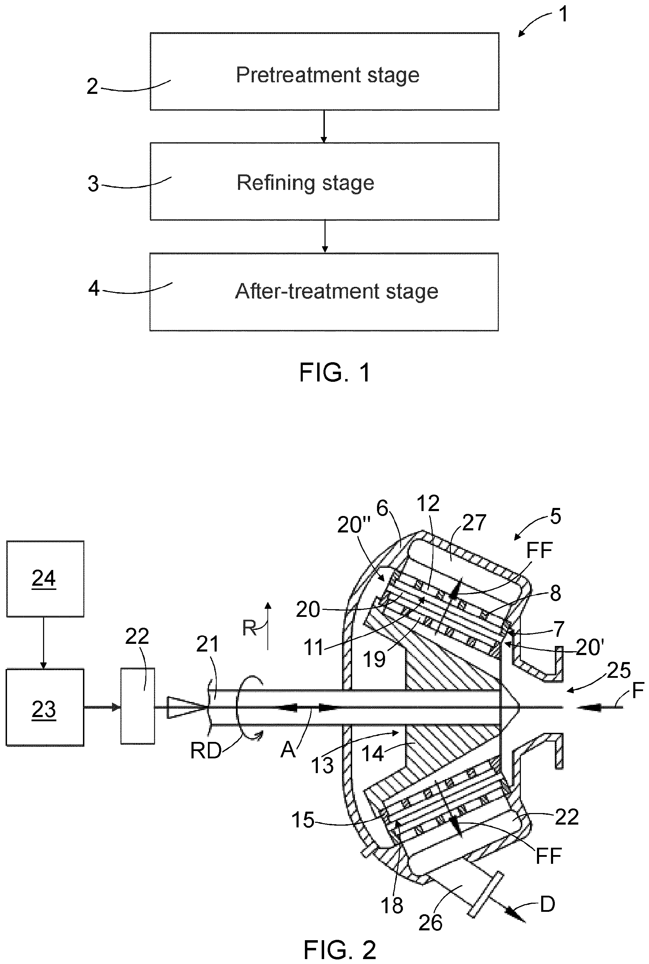

Figure 1 shows schematically an arrangement 1 for producing nanofibrillar cellulose. Nanofibrillar cellulose refers to cellulose microfibrils or microfibril bundles separated from lignocellulose-containing fibre raw material, such as wood material. Often used synonyms for the nanofibrillar cellulose are for example nanofibrillated cellulose (NFC), nanocellulose, microfibrillar cellulose, cellulose nanofiber, nano-scale cellulose, microfibrillated cellulose (MFC) or cellulose microfibrils. Herein the term nanofibrillar cellulose refers to a cellulose having a particle size, i.e. a size of microfibrils or microfibril bundles, typically, but not exclusively, below 100 nanometres in one or more dimensions (ISO/TC 229 Nanotechnologies, Creation date: 2005).

The arrangement 1 for producing nanofibrillar cellulose comprises a pre-treatment stage 2, a refining stage 3 and an after-treatment stage 4.

The pre-treatment stage 2 comprises a preparation of fibre suspension, i.e. fibre pulp or pulp, from the lignocellulose-containing fibre raw material by mixing the lignocellulose-containing fibre raw material and water. The fibre raw material used for producing nanofibrillar cellulose is typically virgin fibre material, such as bleached chemical pulp. The preparation of the fibre suspension may thus for example comprise at least one pulper for slushing the lignocellulose-containing fibre raw material such that a substantially low consistency of the fibre suspension to be supplied further into the refining stage 3 is achieved. The consistency of the fibre suspension is typically not more than 6%, preferably about 2% to 4%. In case of the lignocellulose-containing fibre raw material to be used for producing nanofibrillar cellulose being something else than bleached chemical pulp, the fibre raw material may have to be purified. Therefore, the pre-treatment stage 2 may comprise various kind of purification apparatuses. Additionally, different kind of additives, such as enzymes, maybe added into the fibre suspension at the pre-treatment stage 2. Also, a dilution phase may be included for diluting the fibre suspension to have a desired consistency.

The lignocellulose-containing fibre material suspension is supplied from the pre-treatment stage 2 to the refining stage 3. The refining stage 3 comprises at least one refiner, i.e. one or more refiners. Generally, in refining, an intention is to subject a mechanical processing or treatment effect, i.e. a refining effect, to the lignocellulose-containing fibre material in order to affect the fibre properties and/or fibre length in the fibre material to be refined. In the producing of nanofibrillar cellulose an intention is specially to refine the lignocellulose-containing fibre material in order to separate nanofibrils from the fibre material.

According to an embodiment of the refining stage, the refining stage comprises only one refiner and the fibre material to be refined is subjected to the refining effect in this single refiner number of times, i.e. one or more times, when producing nanofibrillar cellulose. The fibre material already refined at least once by the refiner may thus be recirculated at least once through this single refiner when producing nanofibrillar cellulose.

According to an embodiment of the refining stage, the refining stage comprises at least one series of refiners, each series of refiners comprising at least two successive refiners connected in series relative to each other. The refiners in the series of refiners may have similar or different refining characteristics, i.e. refining surface properties. The fibre material to be refined is subjected to the refining effect in each series of refiners at least once in each refiner. In other words, the fibre material to be refined is subjected to the refining effect at least the number of times corresponding to the number of refiners in the series of the refiners. The fibre material having passed through the series of the refiners at least once may also be recirculated at least once through this series of refiners when producing nanofibrillar cellulose.

Alternatively, the refining stage 3 may comprise two or more single refiners arranged in parallel relative to each other, or two or more series of at least two refiners arranged in parallel relative to each other.

The fibre material to be refined is refined in the refining stage 3 as long as a desired or an intended degree of refining of the nanofibrillar cellulose has been achieved.

The refining stage 3 is followed by the after-treatment stage 4 into which the refined fibre material is supplied for further processing. The further processing may for example comprise one or more purification apparatus, such as a washer or a cleaner, for the purification of the refined fibre material and/or one or more screens to sort the refined fibre material into different fractions. The after-treatment stage 4 may also comprise dewatering equipment like one or more disc filters and/or screw presses.

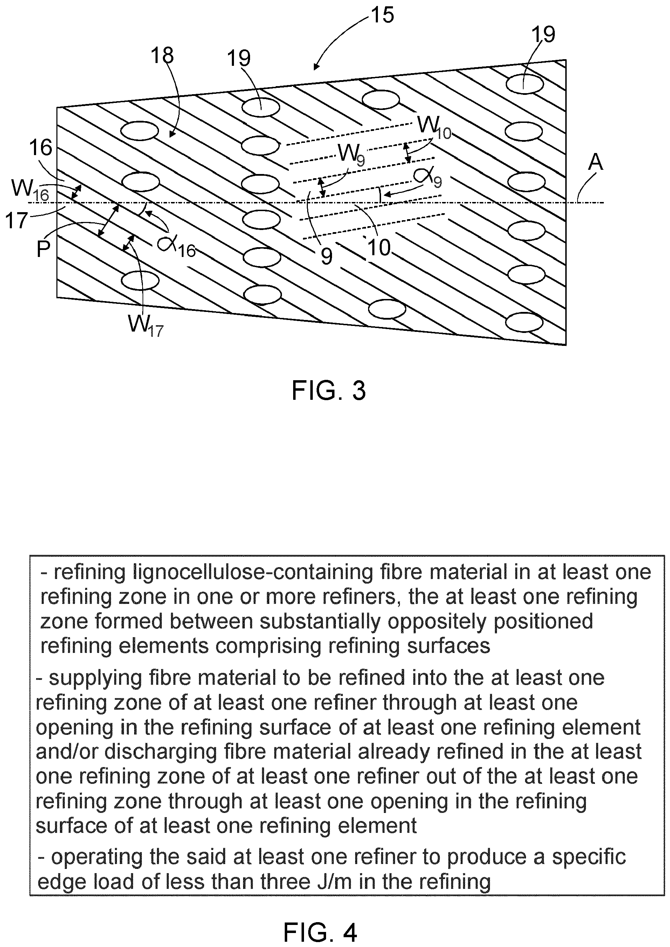

Figure 2 is a schematic cross-sectional side view of a conical refiner 5, which is an example of a refiner applicable to be used for producing nanofibrillar cellulose by refining a lignocellulose-containing fibre material, such as a wood material, according to the solution disclosed herein. The refiner 5 shown in Figure 2 comprises a frame 6 and a stationary, fixed refining element 7, i.e. a stator 7, of the refiner 5, supported on the frame 6. The stator 7 comprises number of stator blade elements 8, i.e. one more stator blade element(s) 8, comprising blade segments 9 and blade grooves 10 therebetween. A portion of some of these stator blade segments 9 and the stator blade grooves 10 are shown schematically in Figure 3.

The stator blade element(s) 8 is/are thus the element(s) that subject(s) the refining effect of the stator 7 to the fibre material to be refined and the frame 6 of the refiner 5 provides a supporting body for the blade element(s) 8 unless a separate body element for supporting the blade element(s) 8 to the frame 6 of the refiner 5 is applied. The blade segments 9 and the blade grooves 10 of the blade element(s) 8 form or provide a refining surface 11 of the respective blade element(s) 8, the refining surface(s) 11 of the blade element(s) 8 forming a refining surface 11 of the stator 7. The same reference sign "11" is thus used herein, for the sake of clarity, to denote both the refining surface of a single blade element 8 as well as a whole or complete refining surface of the stator 7.

The stator 7 may thus comprise a single blade element 8 extending over the whole circumference of the stator 7, whereby this single blade element 8 provides the complete refining surface 11 of the stator 7. Alternatively, the stator 7 may comprise several originally separate blade elements 8, i.e. sector-like blade elements, attached next to each other in the circumferential direction of the stator 7, whereby each single sector-like blade element provides only a part of the complete refining surface of the stator 7 and all the sector-like blade elements together provide the complete refining surface of the stator 7.

The blade element(s) 8 forming or providing the refining surface 11 of the stator 7 further comprise(s) openings 12 extending through the blade element(s) 8 in the thickness direction thereof, the openings 12 thus extending through the refining surface(s) 11 of the blade element(s) 8. The openings 12 allow the lignocellulose-containing fibre material to flow through the respective one or more blade elements 8, and thereby through the refining surface 11 of the stator 7.

The refiner 5 further comprises a rotatable refining element 13, i.e. a rotor 13, of the refiner 5. The rotor 13 comprises a body 14, or a hub 14, and number of rotor blade elements 15, i.e. one or more rotor blade element(s) 15, comprising blade segments 16 and blade grooves 17 therebetween. Some rotor blade segments 16 and rotor blade grooves 17 are shown schematically in Figure 3 too.

The rotor blade element(s) 15 is/are thus the element(s) that subject(s) the refining effect of the rotor 13 to the fibre material to be refined and the hub 14 provides a support for the blade element(s) 15. The blade segments 16 and the blade grooves 17 of the blade element(s) 15 form or provide a refining surface 18 of the respective blade element(s) 15, the refining surface(s) 18 of the blade element(s) 15 forming a refining surface 18 of the rotor 13. The same reference sign "18" is thus used herein, for the sake of clarity, to denote both the refining surface of a single blade element 15 as well as a whole or complete refining surface of the rotor 13.

The rotor 13 may thus comprise a single blade element 15 extending over the whole circumference of the rotor 13, whereby this single blade element 15 provides the complete refining surface 18 of the rotor 13. Alternatively, the rotor 13 may comprise several originally separate blade elements 15, i.e. sector-like blade elements, attached next to each other in the circumferential direction of the rotor 13, whereby each single sector-like blade element provides only a part of the complete refining surface of the rotor 13 and all the sector-like blade elements together provide the complete refining surface of the rotor 13.

The blade element(s) 13 forming or providing the refining surface 18 of the rotor 13 further comprise(s) openings 19 extending through the blade element(s) 15 in the thickness direction thereof, the openings 19 thus extending through the refining surface(s) 18 of the blade element(s). The openings 19 allow the lignocellulose-containing fibre material to flow through the respective one or more blade elements 15, and thereby through the refining surface 18 of the rotor 13.

The rotor 13 is set substantially opposite to the stator 7 such that there is a blade gap 20, i.e. a refining zone 20, between the stator 7 and the rotor 13, i.e. between the blade element(s) 8 of the stator 7 and the blade element(s) 15 of the rotor 13. The blade gap 20 has a first end 20' at the ends of the stator 7 and the rotor 13 of smaller diameter and a second end 20" at the ends of the stator 7 and the rotor 13 of larger diameter.

The body 14 of the rotor 13 is connected to a driving motor 22 by a shaft 21 so that the rotor 13 may be rotated about the stator 7 by the shaft 21 and the motor 22 in a direction of arrow RD, for instance. The arrow RD thus indicates an intended rotation direction RD of the rotor 13. A speed of rotation of the rotor 13 may be controlled for example by controlling a driving output power of the driving motor 22 in a way generally known for the person skilled in the art of refining.

The refiner 5 further comprises a loading device 23 which can be used for moving back and forth the rotor 13 attached to the shaft 21 in an axial direction A of the refiner 5, in order to adjust a size of the blade gap 20 or the refining zone 20 between the blade elements 8, 15 of the stator 7 and the rotor 13, i.e. in order to adjust a free distance between the blade elements 8,15 of the stator 7 and the rotor 15. When adjusting the size of the refining zone 20, the movement of the rotor 13 takes place in the axial direction A of the refiner 5 and the change in the size of the refining zone 20 takes place at some angle between the axial direction A and a radial direction R of the refiner 5, depending on an angle of ascent of the conical structure of the stator 7 and the rotor 13.

The operation of the loading device 23 is controlled by a control unit 24 that is configurable to adjust the size of the refining zone 20 by controlling the loading device 23 to move the rotor 13 in respect of the stator 7. A structure and operation of different applicable loading devices 23 and the respective control units 24 are generally known for the person skilled in the art of refining.

The refiner 5 further comprises a feed channel 25 for feeding the lignocellulose-containing fibre material into the refiner 5, as shown schematically with an arrow indicated by reference sign F. Further the refiner 5 comprises a discharge channel 26 for discharging the already refined lignocellulose-containing fibre material out of the refiner 5, as shown schematically with an arrow indicated by reference sign D. The discharge channel 26 is connected to an intermediate space 27 remaining between the blade element(s) 8 of the stator 7 and the frame 6 of the refiner 5.

Figure 3 shows schematically a planar upper view of a sector-like blade element 15 applicable to be used in the rotor 13 and comprising the refining surface 18. The refining surface 18 comprises the blade segments 16 and the blade grooves 17 therebetween. The blade segments 16 provide the refining effect to the fibre material to be refined and the blade grooves 17 convey the material to be refined on the refining surface 18. In Figure 3 it is also shown, as superimposed by broken lines, some portions of some blade segments 9 and some blade grooves 10 of a stator blade element 8 to be set opposite to the rotor blade element 15.

The operation of the refining according to an embodiment for producing nanofibrillar cellulose is explained in more detail below, referring especially to Figures 2 and 3.

The fibre suspension comprising lignocellulose-containing fibre material to be refined is fed into the refiner 5 via the feed channel 25 in a manner shown by arrow F. The fibre material to be refined passes, in a manner schematically shown by arrows FF, through openings 19 formed through the blade element(s) 15 in the rotor 13 into the refining zone 20 between the rotor 13 and the stator 7, in which the fibre material is refined. The already refined material passes, in a manner as also shown schematically by arrows FF, through openings 12 formed through the blade element(s) 8 in the stator 7 into an intermediate space 27 between the frame 6 of the refiner 5 and the stator blade element(s) 8. The refined material is removed from the intermediate space 27 and out from the refiner 5 via the discharge channel 25, as schematically shown by arrow D.

In the embodiment of Figure 2 the refining zone 20 is fully closed at its ends 20', 20". In the event of the refining zone 20 not being closed at its ends 20', 20", some of the fibre material to fed into the refiner 5 may transfer into the refining zone 20 from the first end 20' of the refining zone 20, and correspondingly, some of the already refined material may also exit the refining zone 20 from the second end 20" of the refining zone 20, wherefrom a connection to the intermediate space 27 would be provided.

Furthermore, during the refining the operation of the refiner 5 is operated to produce a specific edge load SEL of less than three J/m, preferably a specific edge load SEL of less than one J/m, in the refining.

In the above disclosed embodiment of the method for producing nanofibrillar cellulose, the fibre material is processed mechanically by refining it in the refining zone 20 of the refiner 5 provided between substantially oppositely positioned refining elements 7, 13. The refining takes place by rotating the rotor 13 relative to the substantially oppositely positioned stator 7, whereby the refining effect is subjected in the refining zone 20 to the fibre material entered into the refining zone 20 to separate nanofibrils. The fibre raw material to be refined is supplied into the refining zone 20 through the openings 19 in the refining surface 18 of the rotor 13 and the fibre material already refined in the refining zone 20 is discharged out of the refining zone 20 through the openings 12 in the refining surface 11 of the stator 7. Furthermore, the refiner 5 is operated to produce the specific edge load of less than three J/m, preferably less than one J/m, in the refining.

The specific edge load, which describes intensity of the refining, i.e. the way how energy is applied to the fibre material to be refined, may be determined based on the driving output power of the driving motor 22, a cutting edge length of the stator blade segments 9 and the rotor blade segments 16 and the speed of rotation of the rotor 13 in a manner known for a person skilled in the art of refining.

In the embodiment disclosed above the fibre material to be refined is thus supplied into the refining zone 20 through the openings 19 in the refining surface(s) 18 of the rotor blade element(s) 15 and the refined fibre material is discharged out of the refining zone 20 through the openings 12 in the refining surface(s) 11 of the stator blade element(s) 8. This has the effect that a length of travel of the fibre material to be refined in the refining zone is smaller or shorter in the present solution than in conventional refining of nanofibrillar cellulose, wherein the fibre material is supplied into the refining zone through one end thereof and the refined fibre material is discharged out of the refining zone through an opposite end of the refining zone. The shorter length of travel of the fibre material to be refined in the refining zone according to the present solution, when compared to the conventional refining of nanofibrillar cellulose, has the effect that overall frictional forces affecting in the refining surfaces of the blade elements of the refiner 5 remain reasonable in spite of the high apparent viscosity of the nanofibrillar cellulose. This, together with the very moderate specific edge load applied in the refining, provides that the energy consumption in the producing of the nanofibrillar cellulose remains low.

According to an embodiment, the refiner 5 is operated to produce a desired specific edge load SEL by adjusting the size of the refining zone 20. According to this embodiment, the loading device 23 is controlled by the control unit 24 in order to control the size of the refining zone 20, and thereby to affect to the specific edge load SEL applied in the refining.

According to an embodiment, the refiner 5 is operated to produce a desired specific edge load SEL by adjusting the speed of rotation of the rotor 13. According to this embodiment, the driving motor 22 is controlled in order to control the speed of rotation of the rotor 13, and thereby to affect to the specific edge load SEL applied in the refining. The speed of the rotation of the rotor 13 may be controlled for example such that a cutting speed of typically 1 - 80 m/s, preferably 5 - 50 m/s and more preferably 10 - 35 m/s is to be achieved.

According to an embodiment, both the adjustment of the size of the refining zone 20 and the adjustment of the speed of rotation of the rotor 13 may be applied in order to affect to the specific edge load SEL applied in the refining.

According to an embodiment, the fibre material to be refined is subjected in the refining to a specific energy consumption of less than two MWh/T, preferably less than one MWh/T, and more preferably less than 0.5 MWh/T. According to this embodiment, the driving output power of the driving motor 22 is controlled in order to provide the intended specific energy consumption, that may be dependent on a fibre type of the lignocellulose-containing fibre raw material and/or on an intended refining degree of the nanofibrillar cellulose.

Referring to the intended refining degree of the nanofibrillar cellulose, a low quality nanofibrillar cellulose may be defined to be nanofibrillar cellulose, wherein at least 60% of particles fulfil the definition of the nanofibrillar cellulose disclosed above, and a high quality nanofibrillar cellulose may be defined to be nanofibrillar cellulose, wherein at least 90% of particles fulfil the definition of the nanofibrillar cellulose disclosed above.

According to an embodiment, the fibre material to be refined is subjected to the refining effect at least five times. In other words, the same fibre material to be refined is subjected to the refining effect at least five times in order to receive refined fibre material having a desired degree of refining, i.e. comprising a desired amount of nanofibrils having the particle size typically, but not exclusively, below 100 nanometres in one or more dimensions. Subjecting the same fibre material to the refining effect at least five times may take place in one refiner or in a series of refiners, as explained above in view of Figure 1.

According to an embodiment of the method at least a portion of the fibre material to be refined is subjected to the refining effect at least five times, whereby according to an embodiment of the arrangement at least a portion of the fibre material to be refined is arranged to be refined at least five times by one or more refiners.

According to an embodiment of the method at least a portion of the fibre material to be refined is circulated at least five times through the one and same refiner to subject the fibre material to be refined to the refining effect at least five times, whereby according to an embodiment of the arrangement at least a portion of the fibre material to be refined is arranged to be refined at least five times by the one and same refiner to subject the fibre material to be refined to the refining effect at least five times.

The refining stage 3 may be operated as a batch process or as a continuous process. When operated continuously, a portion of at least once refined fibre material may be replaced with unrefined fibre material to be refined and the replaced portion of the at least once refined fibre material may be supplied for further treatment, for example to the after-treatment stage 4. Thereby according to an embodiment of the arrangement, at least a portion of at least once refined fibre material is arranged to be replaced with unrefined fibre material to be refined and the replaced portion of the at least once refined fibre material is arranged to be supplied for further treatment, for example to the after-treatment stage 4. The replaced portion of the at least once refined fibre material does not necessarily fulfil the requirements of the nanofibrillar cellulose and may therefore be applied for some other end use. The replaced portion may for example be 5% - 10% of the capacity of the refining stage 3.

In the example of Figures 2 and 3 above, the fibre material to be refined is supplied into the refining zone 20 through the openings 19 in the rotor blade element(s) 15 and the fibre material already refined in the refining zone 20 is discharged out of the refining zone 20 through the openings 120 in the stator blade element(s) 8.

According to an alternative embodiment of a refiner, the fibre material to be refined may be supplied into the refining zone 20 through the openings 12 arranged in the stator blade element(s) 8 and the fibre material already refined in the refining zone 20 may be discharged out of the refining zone 20 through the openings 19 in the rotor blade element(s) 15.

According to a further alternative embodiment of a refiner, the fibre material to be refined may be supplied into the refining zone 20 through the openings 12 arranged in the stator blade element(s) 8 as well as through the openings 19 arranged in the rotor blade element(s) 15 and that the fibre material already refined in the refining zone 20 may be discharged out of the refining zone 20 through at last one end 20', 20" of the refining zone 20.

According to a further alternative embodiment of a refiner, the fibre material to be refined may be supplied into the refining zone 20 through at last one end 20', 20" of the refining zone 20 and that the fibre material already refined in the refining zone 20 may be discharged out of the refining zone 20 through the openings 12 arranged in the stator blade element(s) 8 as well as through the openings 19 in the rotor blade element(s) 15.

According to some further alternative embodiments of a refiner, only the stator blade element(s) 8 or the rotor blade element(s) 15 comprise(s) openings 12, 19 extending through the respective blade element(s) 8, 15 and through which openings 12, 19 the fibre material to be refined is supplied into the refining zone 20 or through which openings 12, 19 the fibre material already refined in the refining zone 20 is discharged out of the refining zone 20. In this kind of the refiner, respectively, the fibre material already refined in the refiner zone 20 is discharged out of the refining zone 20 through the at least one end 20', 20" of the refining zone 20 or the fibre material to be refined is supplied into the refining zone 20 through the at least one end 20', 20" of the refining zone 20. In other words, in this kind of a refiner only one of the oppositely positioned refining elements is provided with blade element(s) comprising openings, the opposite refining element being provided with solid or uniform blade element(s) not comprising any opening for the fibre material flow.

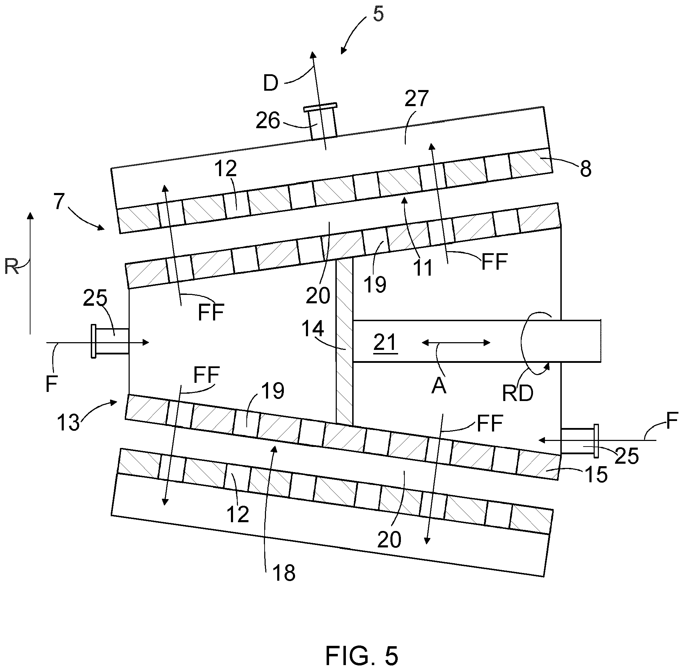

Figure 5 shows schematically in cross section a side view of another conical refiner 5 applicable to be used for producing nanofibrillar cellulose. The refiner 5 of Figure 5 is substantially similar to that of Figure 2, but in the refiner 5 of Figure 5 there are feed channels 25 at both ends of the refiner 5, i.e. a feed channel 25 at the end of the refiner 5 with smaller diameter as well as another feed channel 25 at the end of the refiner 5 with larger diameter. The feed channels 25 of the refiner 5 are arranged to feed or supply the material to be refined into the inner volume of the rotor 13 at both ends thereof and further into the refining zone 20 through openings 19 in the rotor blade elements 15. The structure and operation of the refiner 5 of Figure 5 is otherwise similar to that disclosed above in view of the refiner 5 of Figure 5. For the sake of clarity, the frame 6 of the refiner 5, the driving motor 22, the loading device 23 and the control unit 24 are omitted in Figure 5.

The conical refiner 5 of the examples of Figures 2, 3 and 5 comprises a single stator 7 and a single rotor 13. The number of the stators and the rotors in a single refiner may, however, vary as long as at least one refining zone is provided between at least two refining elements at least one of which refining elements is arranged to be rotated relative to the at least one other refining element contributing to provide the refining zone in question. A single refiner may thus comprise also two or more refining zones, depending on the number of stators and rotors applied in the refiner. Therefore, for example a refiner with two refining zones 20 may be provided either by arranging a single stator between two rotors or by arranging a single rotor between two stators, as it is generally known for the person skilled in the art of refining.

Generally, in the method disclosed herein for producing nanofibrillar cellulose by refining lignocellulose-containing fibre material to separate nanofibrils, the fibre material is refined in at least one refining zone in one or more refiners to separate nanofibrils, the at least one refining zone being formed between substantially oppositely positioned refining elements comprising refining surfaces. The refining takes place by rotating at least one refining element relative to the at least one substantially oppositely positioned refining element, whereby the refining effect is subjected in the refining zone to the fibre material entered the refining zone to separate nanofibrils. The fibre material to be refined is supplied into the at least one refining zone of at least one refiner through at least one opening in the refining surface of at least one refining element and/or the fibre material already refined in the at least one refining zone of at least one refiner is discharged out of the at least one refining zone through at least one opening in the refining surface of at least one refining element. Furthermore, the said at least one refiner is operated to produce a specific edge load of less than three J/m in the refining. Preferably, the at least one refiner is operated to produce a specific edge load of less than one J/m in the refining. Figure 4 discloses schematically the method for manufacturing nanofibrillar cellulose according to the solution disclosed herein.

Furthermore, generally, in the arrangement disclosed herein for producing nanofibrillar cellulose by refining lignocellulose-containing fibre material to separate nanofibrils, the arrangement comprises one or more refiners to refine lignocellulose-containing fibre material to separate nanofibrils. Each one or more refiner comprises at least one refining zone formed between substantially oppositely positioned refining elements comprising refining surfaces, at least one of which refining elements is arranged to be rotatable relative to the at least one substantially oppositely positioned refining element. Furthermore, in at least one refiner the refining surface of at least one refining element comprises at least one opening for supplying the fibre material to be refined into the at least one refining zone through the at least one opening and/or the refining surface of at least one refining element of at least one refiner comprises at least one opening for discharging the fibre material already refined in the at least one refining zone out of the at least one refining zone through the at least one opening. Furthermore, the said at least refiner is arranged to be operated to produce a specific edge load of less than three J/m in the refining. Preferably, the at least one refiner is operated to produce a specific edge load of less than one J/m in the refining.

In all the embodiments of the refining disclosed above, a length of travel of the fibre material to be refined in the refining zone 20 of at least one refiner 5 is smaller than in conventional refining of nanofibrillar cellulose, wherein the fibre material is supplied into the refining zone through one end thereof and the refined fibre material is discharged out of the refining zone through an opposite end of the refining zone. As already said above, in the solution disclosed herein overall frictional forces affecting in the refining surfaces of the blade elements of at least one refiner remain reasonable despite of the high apparent viscosity of the nanofibrillar cellulose, thereby leading to a substantially low energy consumption in the producing of the nanofibrillar cellulose.

According to an embodiment of the method, the fibre material to be refined is supplied into the at least one refining zone of each refiner through at least one opening in the refining surface of at least one refining element and/or the fibre material already refined in the at least one refining zone of each refiner is discharged out of the at least one refining zone through at least one opening in the refining surface of at least one refining element. According to this embodiment, in the arrangement the refining surface of at least one refining element of each refiner comprises at least one opening for supplying the fibre material to be refined into the at least one refining zone through the at least one opening and/or the refining surface of at least one refining element of each refiner comprises at least one opening for discharging the fibre material already refined in the at least one refining zone out of the at least one refining zone through the at least one opening.

Furthermore, for the producing or manufacturing of the nanofibrillar cellulose and the specific edge load SEL applied in the producing or manufacturing of the nanofibrillar cellulose may be affected by selecting properties of the refining surface(s) 11 of the stator blade element(s) 8 and the refining surface(s) 18 of the rotor blade element(s) 15 appropriately, in other words by suitable designing of blade segment - blade groove - configuration of the refining surfaces(s) 11 of the stator blade element(s) 8 and the refining surface(s) 18 of the rotor blade element(s) 15. With the appropriate selection of the blade segment - blade groove - configuration the refiner may thus be configured for enabling the refiner to be operated for producing the specific edge load of less than three J/m, preferably less than one J/m in the refining.

In the following some properties of the refining surface(s) 18 for the rotor blade element(s) 15 or sectors 15 are considered but corresponding properties of the refining surface(s) 11 for the stator blade element(s) 8 or sectors 8 are similar unless otherwise specifically mentioned.

Referring to Figure 3, according to an embodiment a pitch P of the refining surface 18, i.e. a common width of a single blade segment 16 and of a single blade groove 17 next to the blade segment 16 is at most 3 mm. The pitch P of at most 3 mm provides a very dense blade segment - blade groove -configuration, whereby a cutting edge length provided by the blade segments 9, 16 of the stator and rotor blade element(s) 8, 15 in the refiner is very high. This, in common with the openings 12, 19 in the configuration of the stator and rotor blade elements 8, 15 as disclosed above, has an effect that the degree of grinding, i.e. the degree of refining, of the fibre material to be refined will be very high so as to provide a formation of cellulose microfibrils or microfibril bundles, and at the same time allowing the specific edge load SEL to be maintained substantially low. Depending on the degree of grinding a particle size of the separate cellulose microfibrils or microfibril bundles is of some nanometres (nm) or micrometres (µm). A mean length of the separate cellulose microfibrils or microfibril bundles may for example be 0.2 - 200 µm and a mean diameter may for example be 2 - 1000 nm.

According to an embodiment a width W₉, W₁₆ of the respective blade segment 9, 16 is at most half of the pitch P of the blade element. According to this embodiment, and referring again to Figure 3, it thus means that the width W₉, W₁₆ of the respective blade segment 9, 16 is at most equal to a width W₁₀, W₁₇ of the blade groove 10, 17. The effect of this embodiment is that volume of the blade grooves 10, 17 in the blade element(s) 8, 15 are high enough to prevent a clogging of the refining surfaces 11, 18 of the blade elements 8, 15.

According to an embodiment a height of the blade segment 9, 16 is typically at most 10 mm but heights lower than 10 mm, for example less than 5 mm, even less than 3 mm may be preferred in case of very dense segment-groove-pattern. Typically, the segment height is reduced during operation, but in the solution disclosed herein even low heights are possible without sacrificing hydraulic capacity because the fibre material to be refined and/or the fibre material already refined is directed to flow through the openings 12, 19 and therefore the groove volume does not actually limit the hydraulic capacity.

The pitch of the blade element(s) 8, 15 and the total open area of the openings 12,19 in the blade element(s) 8, 15 may be selected in combination such that the common cutting edge length of the blade segments 9, 16 in the refiner is preferably at least 50 km per one revolution of the rotor 13.

According to an embodiment the blade segments 9, 16 in the oppositely positioned blade elements 8, 15 are crosswise to each other. Referring again to Figure 3 showing the refining surface 18 of the rotor blade element 15 and the blade segments 16 and the blade grooves 17 therein it can be seen that the blade segments 16 and the blade grooves 17 are arranged at a blade segment angle α₁₆ of about 30° relative to the axial direction A, depicted by the dot-and-dash line in Figure 3. Generally, the blade segment angle α₁₆ in the rotor blade element 15 may be 0° - 75°, for example 10° - 50°. The blade segments 9, and thereby the blade grooves 10, in the stator blade element 8 are, in turn, arranged at a blade segment angle α₉ of about 0° - 75° relative to the axial direction A to the opposite direction relative to the blade segments 16 and the blade grooves 17 in the rotor blade element 15. The orientation of the blade segments 9 and the blade grooves 10 in the stator blade element 8 relative to the orientation of the blade segments 16 and the blade grooves 17 in the rotor blade element 15 are indicated schematically in Figure 3 by broken lines. Generally, the blade segment angle α₉ in the stator blade element 8 may for example be 5° to 40°.

The crosswise orientation of the blade segments 9, 16 in the opposite blade elements 8, 15 ensures that sufficiently high shear forces are to be focused to the fibre material to be refined by the opposite blade segments 9,16. For that effect to be achieved an angle between the blade segments 9, 16 in the refining surfaces 11, 18 of the oppositely set blade elements 8, 15, i.e. the intersecting angle α₉+α₁₆, may vary between 10° - 100°.

Furthermore, in addition to the conical refiners, the solution disclosed herein may as well be implemented with one or more disc refiners comprising disc-like refining elements extending in a radial direction of the refiner, i.e. in the direction that is substantially perpendicular to the axial direction of the refiner. In the disc refiner, the adjustment of the size of the refining zone takes place in the axial direction of the refiner and the refining element to be moved in the disc refiner, when adjusting the size of the refining zone, may as well be either a stationary refining element or a rotatable refining element. The disc-like refiner may also have any number of stators and/or rotors. The basic structure and operating principle of different disc refiners is known for a person skilled in the art of refiners and therefore is not disclosed in more detail herein.

Furthermore, in addition to the conical refiners and the disc refiners, the solution disclosed herein may as well be implemented with one or more cylindrical refiners comprising cylindrical refining elements extending in an axial direction of the refiner. In cylindrical refiners the adjustment of the size of the refining zone typically takes place by adjusting a diameter of the stationary refining element, whereby the movement of the stationary refining element as well as the change in the size of the refining zone takes place in the radial direction R of the refiner. In the cylindrical refiner the loading device may thus be arranged in an operative connection with the stator in order to cause the diameter of the stator to change in response to a respective control signal applied to the loading device by the control unit, thereby moving the stator or the rotor blade elements towards the rotor or the stator blade elements. Similar adjustment principle could, however, be applied also in the conical refiner as well. The cylindrical refiner may also have any number of stators and/or rotors. The basic structure and operating principle of different cylindrical refiners is also known for a person skilled in the art of refiners and therefore is not disclosed in more detail herein.

It will be obvious to a person skilled in the art that, as the technology advances, the inventive concept can be implemented in various ways. The invention and its embodiments are not limited to the examples described above but may vary within the scope of the claims.

## Claims

1. A method for producing nanofibrillar cellulose, wherein lignocellulose-containing fibre material is refined to separate nanofibrils, the method comprising
refining the lignocellulose-containing fibre material in at least one refining zone (20) in one or more refiners (5) to separate nanofibrils, the at least one refining zone (20) being formed between substantially oppositely positioned refining elements (7, 13) comprising refining surfaces (11, 18) and the refining taking place by rotating at least one (13) refining element (7, 13) relative to the at least one substantially oppositely positioned refining element (8),
supplying the fibre material to be refined into the at least one refining zone (20) of at least one refiner (5) through at least one opening (12, 19) in the refining surface (11, 18) of at least one refining element (7, 13) and/or discharging the fibre material already refined in the at least one refining zone (20) of at least one refiner (5) out of the at least one refining zone (20) through at least one opening (12, 19) in the refining surface (11, 18) of at least one refining element (7, 13), and
operating the said at least one refiner (5) to produce a specific edge load (SEL) of less than three J/m in the refining.

2. A method as claimed in claim 1, **characterized by** operating the at least one refiner (5) to produce the specific edge load (SEL) of less than one J/m in the refining.

3. A method as claimed in claim 1 or 2, **characterized by** subjecting, in the refining, to the fibre material to be refined a specific energy consumption of less than two MWh/T, preferably less than one MWh/T.

4. A method as claimed in any one of the preceding claims, **characterized by** supplying the fibre material to be refined into the refining zone (20) through at least one opening (12, 19) in the refining surface (11,18) of one refining element (7, 13) and discharging the fibre material already refined in the refining zone (20) out of the refining zone (20) through at least one opening (12, 19) in the refining surface (11,18) of the substantially oppositely positioned refining element (7, 13), or by supplying the fibre material to be refined into the refining zone (20) through at least one opening (19) in the refining surface (18) of a rotatable refining element (13) and discharging the fibre material already refined in the refining zone (20) out of the refining zone (20) through at least one opening (12) in the refining surface (11) of the substantially oppositely positioned stationary refining element (7).

5. A method as claimed in any one of the preceding claims, **characterized by** supplying the fibre material to be refined into the refining zone (20) through at least one opening (12) in the refining surface (11) of a stationary refining element (7) and discharging the fibre material already refined in the refining zone (20) out of the refining zone (20) through at least one opening (19) in the refining surface (18) of the substantially oppositely positioned rotatable refining element (13).

6. A method as claimed in any one of the preceding claims, **characterized by** subjecting at least a portion of the fibre material to be refined to the refining effect at least five times.

7. A method as claimed in any one of the preceding claims, **characterized by** circulating at least a portion of the fibre material to be refined at least five times through the one and same refiner (5) to subject the fibre material to be refined to the refining effect at least five times.

8. A method as claimed in any one of the preceding claims, **characterized by** replacing a portion of at least once refined fibre material with unrefined fibre material to be refined and by supplying the replaced portion of the at least once refined fibre material for further treatment.

9. A method as claimed in any one of the preceding claims, **characterized by** operating the at least one refiner (5) to provide the specific edge load (SEL) of less than three J/m, preferably less than one J/m, in the refining by at least one of adjusting a size of the refining zone (20) of the at least one refiner (5) and adjusting a speed of rotation of at least one rotatable refining element (13) of the at least one refiner (5).

10. An arrangement (1) for producing nanofibrillar cellulose, the arrangement comprising one or more refiners (5) to refine lignocellulose-containing fibre material to separate nanofibrils, in which arrangement (1)
each one or more refiner (5) comprises at least one refining zone (20) formed between substantially oppositely positioned refining elements (7, 13) comprising refining surfaces (11, 18), at least one (13) of the refining elements (7, 13) being arranged to be rotatable relative to the at least one substantially oppositely positioned refining element (7),
the refining surface (11, 18) of at least one refining element (7, 13) of at least one refiner (5) comprises at least one opening (12, 19) for supplying the fibre material to be refined into the at least one refining zone (20) through the at least one opening (12, 19) and/or the refining surface (11, 18) of at least one refining element (7, 13) of at least one refiner (5) comprises at least one opening (12, 19) for discharging the fibre material already refined in the at least one refining zone (20) out of the at least one refining zone (20) through the at least one opening (12, 19), and
the said at least one refiner (5) is arranged to be operated to produce a specific edge load (SEL) of less than three J/m in the refining.

11. An arrangement as claimed in claim 10, **characterized in that** the at least one refiner (5) is arranged to be operated to provide the specific edge load (SEL) of less than one J/m in the refining.

12. An arrangement as claimed in claim 10 or 11, **characterized in that** the arrangement (1) is arranged to subject in the refining to the fibre material to be refined a specific energy consumption of less than two MWh/T, preferably less than one MWh/T.

13. An arrangement as claimed in any one of claims 10 to 12, **characterized in that** the refining surface (11, 18) of at least one refining element (7, 13) comprises at least one opening (12, 19) for supplying the fibre material to be refined into the refining zone (20) through the at least one opening (12, 19) and the refining surface (11, 18) of the substantially oppositely positioned refining element (7, 13) comprises at least one opening (12, 19) for discharging the fibre material already refined in the refining zone (20) out of the refining zone (20).

14. An arrangement as claimed in any one of claims 10 to 13, **characterized in that** at least one refiner (5) comprises a rotatable refining element (13) comprising at least one opening (19) in the refining surface (18) for supplying the fibre material to be refined into the refining zone (20) through the at least one opening (19) and a substantially oppositely positioned stationary refining element (7) comprising at least one opening (12) in the refining surface (11) for discharging the fibre material already refined in the refining zone (20) out of the refining zone (20) through the at least one opening (12), or **in that** at least one refiner (5) comprises a stationary refining element (7) comprising at least one opening (12) in the refining surface (11) for supplying the fibre material to be refined into the refining zone (20) through the at least one opening (12) and a substantially oppositely positioned rotatable refining element (13) comprising at least one opening (19) in the refining surface (18) for discharging the fibre material already refined in the refining zone (20) out of the refining zone (20) through the at least one opening (19).

15. An arrangement as claimed in any one of claims 10 to 14, **characterized in that** the arrangement (1) is arranged to provide the specific edge load (SEL) of less than three J/m, preferably less than one J/m, in the refining by at least one of adjusting a size of the refining zone (20) of the at least one refiner (5) and adjusting a speed of rotation of at least one rotatable refining element (13) of the at least one refiner (5).
